# EUROPÄISCHE PATENTSCHRIFT

(11) **EP 0 761 594 B1**
(45) Veröffentlichungstag und Bekanntmachung des Hinweises auf die Patenterteilung: **16.06.1999**
(21) Anmeldenummer: 96114467.2
(22) Anmeldetag: 10.09.1996
(51) Int. Cl.: C01B 7/04

(54) **Verfahren zur Herstellung von Chlor aus Chlorwasserstoff**
Process for the production of chlorine from hydrogen chloride
Procédé de production de chlore à partir de chlorure d'hydrogène

(30) Priorität: 12.09.1995 DE 19533659
(43) Veröffentlichungstag der Anmeldung: 12.03.1997
(73) Patentinhaber: BASF AKTIENGESELLSCHAFT, 67056 Ludwigshafen (DE)
(72) Erfinder: Hagemeyer, Alfred, Dr., 67063 Ludwigshafen (DE); Trübenbach, Peter, Dr., 67065 Ludwigshafen (DE); Rieker, Christopher William, 68163 Mannheim (DE); Wünsch, Martin, Dr., 58566 Kirspe (DE); Watzenberger, Otto, Dr., 67059 Ludwigshafen (DE)
(74) Vertreter: Isenbruck, Günter, Dr.

(56) Entgegenhaltungen:
- WO-A-91/06505
- FR-A- 2 643 893
- US-A- 3 210 158
- DATABASE WPI Week 7337 Derwent Publications Ltd., London, GB; AN 54282 XP002020199 & JP 48 029 038 A (MITSUI TOATSU CHEMICAL) , 1973
- IND. ENG. CHEM. RES., Bd. 33, 1994, Seiten 2996-3003, XP000575187 H. Y. PAN ET AL.: "Process for converting hydrogen chloride to chlorine"

## Beschreibung

Die vorliegende Erfindung betrifft ein katalytisches Verfahren zur Herstellung von Chlor aus Chlorwasserstoff in zwei Stufen, a) bei Temperaturen von 300 bis 420°C und b) anschließend mit einem sauerstoff-enthaltenden Gas bei Temperaturen von 370 bis 460°C.

Bei vielen chemischen Umsetzungen fällt HCl in großen Mengen als Abfallprodukt an, wie z.B. bei der Phosgenierung von Diaminen, bei der Isocyanatsynthese für Polyurethane, bei der Vinylchlorid-Produktion, bei Chlorierungen für chemische Synthesen und bei der Müllverbrennung.

Die direkte und kontinuierliche Umsetzung von HCl mit Luft oder Sauerstoff an einem Kupferchlorid-Katalysator ist als Deacon-Prozeß bekannt [Przem. Chem. 57(1) (1978), 14 bis 17 und Szczecin. Tow. Nauk., Wydz. Nauk. Mat. Tech. 9 (1973) 37 bis 49]. Da die Reaktion gleichgewichts-limitiert ist, werden maximal ca. 75% Umsatz erreicht. Der Produktstrom enthält somit neben Cl₂ noch HCl, H₂O und Luft/Sauerstoff. Das macht eine nachfolgende, aufwendige Aufarbeitung auf reines, wasserfreies Cl₂ erforderlich. Da im Produktgas also große Mengen wässriger Salzsäure enthalten sind, entstehen gravierende Korrosionsprobleme.

Aus der WO-A-91/06505 ist ein Verfahren zur Chlorherstellung durch HCl-Oxidation bekannt, in dem Katalysatorsysteme eingesetzt werden, bei denen CuCl₂ (oder CuO) mit Promotoren - wie Alkalimetallchloride z.B. NaCl und KCl, Seltenerdmetallchloride z.B. LaCl₃, CeCl₃, PrCl₃, NdCl₃. Übergangsmetalloxide z.B. Co₂O₃, Co₃O₄, Cr₂O₃, NiO, Ni₂O₃, Mo₂O₃ und CuO sowie UO₂(NO₃)₂ und Mn-Salze - auf inerten Trägern wie SiO₂, Al₂O₃, γ-Al₂O₃, TiO₂, Bimsstein, SiO₂ und Molsiebe aufgebracht sind.

Die räumliche oder zeitliche Trennung von Chlorierung und Dechlorierung ist für das Fließbett aus DE-A-40 04 454, für das Wirbelbett aus US-A-4 959 202 und für das Festbett aus der WO-A-91/06505 bekannt.

Aus der DE-A-43 36 404 ist eine theoretische Abhandlung eines modifizierten Deacon-Prozesses bekannt, in dem Mischungen aus Mn- und V-Oxiden auf Molsieb-Zeolithen als Katalysatoren vorgeschlagen wurden. Dieses Verfahren hat den Nachteil, daß Vanadylchloride eine hohe Flüchtigkeit besitzen und MnO₂ eine zu hohe Aktivität hat. Die zu hohe Aktivität des MnO₂ bewirkt die Chlorbildung schon während der Beladungsphase, so daß HCl- und Chlorströme gemischt werden. Ferner sind die vorgeschlagenen Molsieb-Zeolithe in der Regel unter diesen Bedingungen nicht korrosions-beständig.

JP-A-48029038 betrifft die Chlorherstellung aus Chlorwasserstoff durch Oxidation unter Verwendung von Metallchloriden als Katalysator. Die Umsetzung wird bei einer Temperatur von 300 bis 400°C an einem Katalystor aus Kupferchlorid, Zinnchlorid und Kaliumchlorid auf einem inerten Träger durchgeführt. Der erfindungsgemäß eingesetzte Katalysator enthält kein Zinnchlorid.

Nachteilig an den bislang bekannten Verfahren ist die nicht zufriedenstellende Stabilität der eingesetzten Katalysatoren beispielsweise durch Katalysatorabrieb und Werkstoffprobleme z.B. durch Abrasion an den Reaktorwänden.

Der vorliegenden Erfindung lag daher die Aufgabe zugrunde, den zuvor genannten Nachteilen abzuhelfen.

Demgemäß wurde ein neues und verbessertes Verfahren zur Herstellung von Chlor aus Chlorwasserstoff durch alternierende
a) Beladung eines Katalysators mit Chlorwasserstoffgas bei Temperaturen von 300 bis 420°C und
b) anschließende Regenerierung dieses Katalysators mit einem sauerstoff-enthaltenden Gas bei Temperaturen von 370 bis 460°C, wobei der Temperaturunterschied von a) zu b) kleiner als 100°C ist und man als Katalysator monomodale oder polymodale Sinterformteile einsetzt, die im wesentlichen aus
   - 2 bis 30 Gew.-%: Oxiden und/oder Chloriden von Kupfer, Eisen, Ruthenium, Cer, Bismut, Nickel, Cobalt, Gallium, Neodym oder deren Gemischen,
   - 0 bis 30 Gew.-%: Chloriden von Lithium, Natrium, Kalium, Zink oder deren Gemischen und
   - 98 bis 40 Gew.- %: keramischen Trägern, silikatischen Trägern, Glasträgern oder deren Gemischen
   bestehen, hergestellt durch Verformen eines Gemisches aus
   I.) den Komponenten
      A) 15 bis 70 Vol.-% eines anorganischen, eines metallischen Pulvers und/oder einer Aktivkomponente,
      B I) 30 bis 85 Vol.-% eines Polyethylen- oder Polypropylenpolymers oder eines Copolymeren aus Ethylen, Propylen, Buten-1 oder Isobuten oder eines Polystyrolcopolymers oder eines Polymethylmethacrylatcopolymers oder eines Polyethylenoxidcopolymers oder eines Ethylenvinylacetatcopolymers oder
      B II) einer Mischung aus
         B₁) 50 bis 100 Gew.-% eines Polyoximethylenhomo- oder copolymerisats und
         B₂) 0 bis 50 Gew.-% eines in B₁) homogen gelösten oder mit einer mittleren Teilchengröße von weniger als 1µm in B₁) dispergierten Polymerisats und
      C) 0 bis 15 Vol.-% eines Dispergierhilfsmittels,
         durch Entfernen des Bindemittels durch Pyrolyse bei Temperaturen von 300 bis 600°C und anschließendes Vorsintern bei Temperaturen von 600 bis 1400°C und gegebenenfalls Aufbringen von Aktivkomponenten auf die Komponente A) oder auf der vor gesinterten Masse durch gegebenenfalls mehrfaches Tränken, Imprägnieren, Sprühimprägnieren, Auffällen, Hicoaten oder Washcoaten, wobei die Katalysatoren nach der pyrolytischen Entfernung des Binders eine spezifische Oberfläche nach BET von 0,01 bis 250m²/g und eine Porengrößenverteilung von 50 bis 300.000nm gemessen mit der Hg-Druckporosimetrie-Methode aufweisen und
         a) 10 bis 95% des Porenvolumens bei dem 0,2- bis 100-fachen und/oder
         b) 10 bis 80% des Porenvolumens bei dem 0,8- bis 100-fachen und/oder
         c) 50 bis 95% des Porenvolumens bei dem 0,2- bis 1-fachen und/oder
         d) 50 bis 80% des Porenvolumens bei dem 0,8- bis 1-fachen des mittleren Porendurchmessers liegt und
         e) die Halbwertsbreite der Porengrößenverteilung weniger als das 0,6-fache des mittleren Porendurchmessers beträgt,
      oder
   II.) den Komponenten
      A) 15 bis 70 Vol.-% eines anorganischen, eines metallischen Pulvers und/oder einer Aktivkomponente
      B II) einer Mischung aus
         B₁) 50 bis 100 Gew.-% eines Polyoximethylenhomo- oder copolymerisats und
         B₂) 0 bis 50 Gew.-% eines in B₁) homogen gelösten oder mit einer mittleren Teilchengröße von weniger als 1µm in B₁) dispergierten Polymerisats und
      C) 0 bis 15 Vol.-% eines Dispergierhilfsmittels,
         durch Entfernen des Bindemittels durch Behandlung mit einer Säure bei Temperaturen von 100 bis 160°C, Restpyrolyse bei Temperaturen von 400 bis 600°C und anschließendes Vorsintern bei Temperaturen von 600 bis 1400°C und gegebenenfalls Auf bringen von Aktivkomponenten auf der Komponente A) oder auf der vorgesinterten Masse durch gegebenenfalls mehrfaches Tränken, Imprägnieren, Sprühimprägnieren, Auffällen, Hicoaten oder Washcoaten, wobei die Katalysatoren nach der pyrolytischen Entfernung des Binders eine spezifische Oberfläche nach BET von 0,01 bis 250m²/g und eine Porengrößenverteilung von 50 bis 300.000nm gemessen mit der Hg-Druckporosimetrie-Methode aufweisen und
         a) 10 bis 95% des Porenvolumens bei dem 0,1- bis 3-fachen und/oder
         b) 10 bis 80% des Porenvolumens bei dem 0,4- bis 3-fachen und/oder
         c) 50 bis 95% des Porenvolumens bei dem 0,1- bis 1-fachen und/oder
         d) 50 bis 80% des Porenvolumens bei dem 0,4- bis 1-fachen des mittleren Porendurchmessers liegt und
         e) die Halbwertsbreite der Porengrößenverteilung weniger als das 0,5-fache des mittleren Porendurchmessers beträgt.
gefunden.

Das erfindungsgemäße Verfahren kann wie folgt durchgeführt werden:
Das vorliegende Verfahren kann diskontinuierlich, bevorzugt kontinuierlich, besonders bevorzugt instationär durch alternierende Reaktionsführung, insbesondere im Festbett a) durch Beladung des Katalysators bei einer Temperatur von 300 bis 420°C, bevorzugt 360 bis 410°C und b) anschließender Regenerierung des Katalysators mit einem Sauerstoff enthaltenden Gas bei Temperaturen von 370 bis 460°C, bevorzugt 380 bis 420°C, besonders bevorzugt bei einer Temperaturdifferenz von a) zu b) von kleiner als 100°C, insbesondere Kleiner als 80°C durchgeführt werden. Die Katalysatoren sind dabei spezielle Katalysatoren aus Sinterformteilen, die bevorzugt monomodale oder polymodale Porengrößenverteilungen besitzen. Nach der Beladung bzw. nach der Regenerierung kann der Katalysator bevorzugt mit einem inerten Gas (Spülgas) gereinigt werden. Der Katalysator kann in einer bevorzugten Ausführungsform in Gradientenschüttung eingesetzt werden.

Bei der instationären Reaktionsführung wird in der Regel die HCl-Oxidation in die zwei Teilschritte zerlegt, nämlich Beladung des Katalysators mit HCl und dessen anschließende Regenerierung mit Sauerstoff. Dieser Zyklus wird in der Regel ständig wiederholt, wobei der Katalysator in der Regel auch als Stoff- und Wärmespeicher dient.

Im Beladeschritt wird der Katalysator in der Regel mit HCl beaufschlagt und seine oxidische Aktivkomponentenphase wandelt sich in die Chloridphase und Wasser um. Gegebenenfalls nach einer kurzen Spülphase mit Inertgas wird der beladene Katalysator mit einem sauerstoffhaltigem Gas umströmt. Dabei wird in der Regel das Chlor freigesetzt und die oxidische Phase zurückgebildet.

Die Chlorabtrennung aus dem Produktgas kann z.B. durch Kondensation, Absorption in Lösungsmitteln und/oder Druckwechselabsorption erfolgen.

Für die technische Realisierung des instationären Reaktionskonzepts gibt es 2 Varianten, nämlich entweder die räumliche oder die zeitliche Trennung der beiden Teilschritte.

Bei ersterem kommt ein Wanderbett oder eine zirkulierende Wirbelschicht unter Verwendung eines Riser- oder Downerreaktors zur Anwendung, so daß die Katalysatorteilchen aus der Chlorierzone, nach Abtrennung des gebildeten Reaktionswassers und überschüssiger HCl, zu einem separaten Dechlorierreaktor gefördert werden, in dem der Katalysator durch Zufuhr von Sauerstoff regeneriert wird. Der regenerierte Katalysator wird in die Chlorierzone zurückgeführt. Der Prozeß ist kontinuierlich und zyklisch, da der Katalysator fortwährend im Kreis gefördert wird. Der Katalysator ist hohen mechanischen Beanspruchungen ausgesetzt und muß daher über eine ausreichende Härte und hohe Abriebfestigkeit verfügen. Die Reaktorwände werden durch Abrasion stark beansprucht.

Eine zeitliche Trennung läßt sich mit einem Festbett realisieren, indem periodisch zwischen der HCl-Zuführung und, evtl. nach einer Spülphase mit Inertgas, dem Regeneriergas (Sauerstoff) umgeschaltet wird.

Ein Deacon-Prozeß mit sequentieller Reaktionsführung, der auf der Separierung der Reaktion in die Teilschritte Chlorierung und Dechlorierung des Katalysators basiert, ermöglicht bei vollständigem HCl-Umsatz die Erzeugung von nahezu HCl-freiem, trockenem Chlor. Damit entfallt die aufwendige Trennung und der Prozeß kann konkurrenzfähig zu Elektrolyseverfahren werden. Die weitgehend wasserfreie Atmosphäre vermindert die Korrosionsproblematik und ermöglicht den Einsatz konventioneller Werkstoffe.

Als Katalysatoren für das erfindungsgemäße Verfahren eignen sich Sinterformteile, die im wesentlichen bestehen aus
2 bis 30 Gew.-% einer oder mehreren Aktivkomponenten, ausgewählt aus der Gruppe Cu, Fe, Ru, Ce, Bi, Ni, Co, Ga, Nd in oxidischer oder chloridischer Form, bevorzugt 3 bis 25 Gew.-% einer oder mehreren Aktivkomponenten, ausgewählt aus der Gruppe Cu, Fe, Ru, Ni, Co in oxidischer oder chloridischer Form, besonders bevorzugt 5 bis 20 Gew.-% einer oder mehreren Aktivkomponenten, ausgewählt aus der Gruppe Cu, Fe, in oxidischer oder chloridischer Form, insbesondere im Atomverhältnis von Cu/Fe von 1:9 bis 9:1,
0 bis 30 Gew.-% einer oder mehrerer Chloride, ausgewählt aus der Gruppe Lithium, Natrium, Kalium und Zink, bevorzugt 1 bis 25 Gew.-% einer oder mehrerer Chloride, ausgewählt aus der Gruppe Lithium, Natrium und Kalium, besonders bevorzugt 3 bis 20 Gew.-% einer oder mehrerer Chloride, ausgewählt aus der Gruppe Natrium und Kalium,
keramischen Trägern, silikatischen Trägern, Glasträgern oder deren Gemischen, bevorzugt keramischen Trägern, silikatischen Trägern oder deren Gemischen, besonders bevorzugt keramischen Trägern wie SiC, Si₃N₄, BN, B₄C, WC, TiC, TiN, ZrN, AlN oder deren Gemischen, insbesondere SiC, Si₃N₄ oder deren Gemischen und
gegebenenfalls einer Imprägnierung wie Silanierung, Fluorierung oder Ag-Beschichtung.

Eine Festbettschüttung kann neben dem Katalysator noch Vor- oder Nachschüttungen enthalten. Bevorzugt sind Nachschüttungen aus reinem Trägermaterial, mit Alkalichlorid beladenem Trägermaterial oder aus Cr-beladenem Trägermaterial.

Ferner kann für die Katalysatorschüttung selbst eine Gradientenschüttung aus verschiedenen, in Serie geschalteten Kontakten herangezogen werden, wobei für die einzelnen Fraktionen sowohl die Aktivmetallbeladung als auch (simultan) die Aktivmetallverteilung über den Kornquerschnitt variiert werden kann.

Die HCl-Beladung und die Dechlorierung kann sowohl im Gleich- als auch im Gegenstrom erfolgen. Beim technischen Reaktor wird im allgemeinen mit Strömungsumkehr gearbeitet, aus Gründen einer vorteilhaften Wärmeführung.

Die HCl-Konzentration im Feed kann zwischen 5 bis 100% HCl variieren. Vorteilhaft sind hohe HCl-Konzentrationen, wenn die Stabilität des Kontaktes dies zuläßt. Bevorzugt sind daher 50 bis 100 %-iger HCl-Feed. Es kann bis vor, zum oder nach dem HCl-Durchbruch beladen werden.

Nach Abschalten des HCl-Beladestromes kann sich noch eine Equilibrierphase unter HCl-Atmosphäre (quasi HCl-Aufpressen und Stehenlassen wie im diskontinuierlichen Batch-Betrieb) anschließen, um die aufzunehmende Chlormenge noch zu erhöhen.

Als inertes Gas (Spülgas) eignen sich Stickstoff, Edelgase, CO₂ oder deren Mischungen. Es kann Gleich- oder Gegenspülung angewandt werden.

Die Dechlorierung kann mit sauerstoffhaltigen Gasen, vorzugsweise mit Luft, angereicherter Luft oder reinem Sauerstoff, erfolgen.

Die Gasflüsse (Belastungen) können für die Teilschritte (Beladen, Spülen, Dechlorieren) unterschiedlich sein. Günstige Belastungen (l Gas pro h pro l Katalysator) liegen für Beladung und Regenerierung im Bereich von 10 bis 5000 h⁻¹, bevorzugt 100 bis 2000 h⁻¹.

Auch sind bei Beladung und Dechlorierung Belastungsrampen möglich, d.h. die Gasgeschwindigkeiten werden kontinuierlich oder in diskreten Stufen geändert, um die Verweilzeit- oder Stoff-Konzentrationen in der Gasphase zu beeinflussen.

Die Katalysatoren für das erfindungsgemäße Verfahren können wie folgt hergestellt werden:
In einer Mischvorrichtung, bevorzugt mit Heizvorrichtung, beispielsweise einem Kneter, einem Extruder oder einem Scherwalzenextruder können dem Polymer der Komponente B) (Komponenten nachstehend definiert) in geschmolzenem Zustand bei Temperaturen von 80 bis 250°C, bevorzugt 100 bis 220°C, besonders bevorzugt 120 bis 200°C die Komponente A), die anorganischen und/oder metallischen Pulver und gegebenenfalls die Aktivkomponenten und dann das Dispergierhilfsmittel der Komponente C) oder zuerst Komponente C) und dann Komponente A) oder die Komponenten A) und C) gemeinsam zugegeben werden. Die innig (intensiv) vermischten Massen können z.B. durch Pressen, Verstrangen oder Spritzgießen, insbesondere durch Spritzgießen bei Temperaturen von 120 bis 250°C, bevorzugt 140 bis 220°C, besonders bevorzugt 150 bis 200°C und Drücken von 500 bis 2000 bar, bevorzugt 600 bis 1800 bar, besonders bevorzugt 700 bis 1600 bar verformt werden. Dabei können in einem Formgebungsschritt bei Spritzgießformtemperaturen von 40 bis 160°C, bevorzugt 60 bis 150°C, besonders bevorzugt 80 bis 140°C beliebig geformte Katalysatorträger oder Katalysatoren wie beispielsweise Raschig Ringe, Sattelkörper, Sternringe, gelochte und/oder gerippte geometrische Körper wie Ringe, Kugeln, Quader, Würfel, Kegel, Pyramiden, Prismen, Oktaeder, Zylinder, Pyramidenstümpfe und Kegelstümpfe - in der Regel ohne Nachbearbeitung - hergestellt werden.

Wagenräderprofile, Honigwabenprofile, Fensterrahmenprofile können bei Temperaturen von 120 bis 250°C, besonders bevorzugt bei 150 bis 200°C zu Monolithen extrudiert werden.

Die nach dem Formgebungsvorgang erhaltenen Grünkörper können
I) durch Pyrolyse bei 300 bis 600°C, bevorzugt 350 bis 600°C, besonders bevorzugt 400 bis 600°C behandelt, oder
II) in einer gasförmigen, säurehaltigen Atmosphäre bei Temperaturen von 100 bis 160°C, bevorzugt 100 bis 150°C, besonders bevorzugt unter der Erweichungstemperatur der Komponente B, bevorzugt einem Polyacetal, katalytisch entbindert werden.

Die entformten Grünlinge werden erfindungsgemäß bevorzugt in einer (gasförmigen) säurehaltigen Atmosphäre zwecks Entfernung des Bindemittels behandelt. Unter (gasförmigen) säurehaltigen Atmosphären können sowohl solche aus reinen Säuren verstanden werden, die bei den Behandlungstemperaturen gasförmig vorliegen, es können aber auch darunter solche aus Mischungen von Säuren mit einem Trägergas verstanden werden. Als Trägergase kommen beispielsweise Luft oder Stickstoff oder Edelgase in Betracht. Als Säuren kommen die anorganischen Säuren in Betracht, die bei Raumtemperatur gasförmig sind, z.B. die Halogenwasserstoffe, Schwefelwasserstoff oder solche Säuren, die bei den Behandlungstemperaturen in merklichem Umfang verdampfbar sind, z.B. Salpetersäure.

Als organische Säuren kommen grundsätzlich solche Säuren oder Säuregemische in Betracht, die einen Siedepunkt oder Sublimationspunkt bei Normaldruck von unter 130°C haben, z.B. Oxalsäure, Ameisensäure, Essigsäure oder Trifluoressigsäure.

Anstelle der gasförmigen, säurehaltigen Atmosphäre können aber die entformten Grünlinge auch in einer gasförmigen Bortrifluorid enthaltenden Atmosphäre zwecks Entfernung des Bindemittels behandelt werden. Unter gasförmigen Bortrifluorid enthaltenden Atmosphären kann sowohl reines Bortrifluorid verstanden werden, es können aber auch darunter Mischungen von Bortrifluorid mit einem Trägergas verstanden werden. Als Trägergase kommen beispielsweise Luft oder Stickstoff oder Edelgase in Betracht.

Anstelle von Bortrifluorid können selbstverständlich auch Addukte von Bortrifluorid verwendet werden, die bei den Behandlungstemperaturen reversibel und ohne Zersetzung der Komponenten wieder in die Ausgangskomponenten gespalten werden können. Insbesondere geeignet sind die Additionsverbindungen des Bortrifluorids mit Ether, z.B. Dimethylether, Diethylether, Dibutylether und tert.-Butylmethylether.

Besonders bevorzugt sind Salpetersäure, wasserfreie Oxalsäure oder Oxalsäuredihydrat. Weiterhin eignet sich Glyoxalsäure. Außerdem kommen Benzolsulfonsäure, die Naphthalinsulfonsäuren und Maleinsäure oder Gemische dieser Säuren in Betracht. Diese können sowohl für sich allein oder auch zusammen mit einem Trägergas wie Luft, Stickstoff oder einem Edelgas bei der Entbinderung eingesetzt werden.

Die erfindungsgemäß zu verwendenden Säuren gelangen bei der Entbinderungstemperatur zunächst in die Gasphase, wirken von hier auf das Bindemittel ein und desublimeren oder erstarren nach Abkühlung an den Wandungen der Entbinderungsvorrichtung. In einem anschließenden Entbinderungsvorgang gelangen sie wieder in die Gasphase, d.h. die Säure verläßt die Vorrichtung praktisch nicht. Hierin liegt eine besonders bevorzugte Ausführungsform des erindungsgemäßen Verfahrens.

Zur Erleichterung der Dosierung kann es zweckmäßig sein, die obengenannten Säuren als Lösung in polaren Lösungsmitteln, vorzugsweise mit Siedepunkten unter 200°C, einzusetzen. Als solche kommen vor allem Wasser, Isopropanol, Aceton, Dioxan, Ethanol, Essigsäure und Ameisensäure in Betracht.

Die säurekatalysierte Entbinderung kann bei Normaldruck oder bei vermindertem Druck (0,001 bis 1bar) durchgeführt werden.

Durch anschließendes Vorsintern, in der Regel bei Temperaturen von 600 bis 1400°C, bevorzugt 600 bis 1100°C, besonders bevorzugt bei 600 bis 800°C unter oxidierenden Bedingungen (Luft), in Inertgas (N₂, Ar, He) oder unter reduzierenden Bedingungen (N₂/H₂, Ar/H₂) kann der Formkörper zu den Katalysatoren mit ihrer endgültigen Festigkeit und Porenverteilung umgewandelt werden. Durch den Vorsinterprozeß erhöht sich in der Regel die Stabilität und die Härte der porösen Formkörper beträchtlich. Die Schneidehärte beträgt in der Regel 1 bis 8 kg (800°C), bevorzugt 1,5 bis 7 kg (800°C), besonders bevorzugt 2 bis 6 kg (800°C). Die Wasseraufnahme liegt in der Regel im Bereich von 0,05 bis 5 ml/g, bevorzugt 0,1 bis 3 ml/g, besonders bevorzugt 0,1 bis 1 ml/g, so daß mehr Aktivkomponente auf einen erfindungsgemäßen Katalysatorträger aufgebracht werden kann, ohne in der Regel wesentliche Einbußen in der Härte zu erzielen. Neben streng monomodalen Porengrößenverteilungen können so auch polymodale (bimodale, trimodale, tetramodale und höher modale) Porengrößenverteilungen hergestellt werden. Mit diesem Verfahren können Katalysatorträger und Katalysatoren mit einer hohen Festigkeit und einer hohen thermischen bzw. chemischen Stabilität hergestellt werden. Als Geometrien der Formkörper sind alle Formen denkbar, die über Granulierung, Walzen, Pressen, Strangpressen, Extrusion oder Spritzguß herstellbar sind.

Die mittlere Porengröße wird in der Regel von der Korngröße der Komponente A), der anorganischen, metallischen Pulver und/oder der Aktivkomponenten in der Regel nur durch die Zwischenräume der eingesetzten Pulverteilchen bestimmt. Die mittlere Porengröße und die Porengrößenverteilung sind deshalb von der mittleren Korngröße und der Teilchengrößenverteilung des eingesetzten Pulvers abhängig. Mit kommerziell erhältlichen Metall- oder Keramikpulvern können auf diese Weise mechanisch stabile, rißfreie, monomodal oder polymodal poröse Materialien, wie die erfindungsgemäßen Katalysatorträger oder Katalysatoren, hergestellt werden. Die enge Porengrößenverteilung kann somit je nach Bedarf im Meso- und Makroporenbereich eingestellt werden und führt in der Regel zu einer hoch monodispersen Porenverteilung.

Die spezifischen Oberflächen nach BET (Brunnauer, Emmet, Teller) der erfindungsgemäßen Katalysatorträger und Katalysatoren liegen in der Regel bei 0,01 bis 250 m²/g, bevorzugt 0,1 und 150 m²/g, besonders bevorzugt 1 und 90 m²/g, insbesondere 2 bis 30 m²/g (800°C).

Die mittlere Korngröße der erfindungsgemäß eingesetzten Pulver der Komponente A) kann in der Regel ein nanokristallines Pulver von 5 bis 500.000 nm, bevorzugt 20 bis 100.000 nm, besonders bevorzugt 50 bis 50.000 nm sein, wobei die Abweichungen der Korngröße bei 80%, bevorzugt 90%, besonders bevorzugt 95% der Körner 0 bis 30%, bevorzugt 0 bis 20%, besonders bevorzugt 0 bis 10% von der mittleren Korngröße beträgt.

Als Komponente A) eignen sich:
A I) keramische Pulver ausgewählt aus der Gruppe SiC, Si₃N₄, BN, B₄C, WC, TiC, TiN, ZrN, AlN oder deren Gemische, bevorzugt SiC, Si₃N₄, WC, TiC, TiN, ZrN oder deren Gemische, besonders bevorzugt SiC, Si₃N₄ oder deren Gemische und/oder
A II) silikatische Pulver ausgewählt aus Metallen der Elemente Berylium, Magnesium, Calcium, Eisen, Cobalt, Nickel, Kupfer, Zink, Titan, Zirkon, Vanadin, Niob, Tantal, Chrom, Molybdän, Wolfram, Mangan, Cer und Siliciumdioxid oder deren Gemische, bevorzugt Metallen der Elemente Magnesium, Calcium, Eisen, Zink, Titan, Zirkon und Siliciumdioxid oder deren Gemische, besonders bevorzugt Metallen der Elemente Magnesium, Calcium, Eisen, Zink und Siliciumdioxid oder deren Gemische, insbesondere SiC und Si₃N₄ oder deren Gemische und gegebenenfalls
A III) eine Aktivkomponente ausgewählt aus der Gruppe der Chloride oder Oxide der Elemente Kupfer, Eisen, Cobalt, Nickel, Ruthenium, Cer, Bismut, Gallium, Neodym oder deren Gemische, bevorzugt Kupfer, Eisen, Cobalt, Nickel, Ruthenium oder deren Gemische, besonders bevorzugt Kupfer und Eisen oder deren Gemische und gegebenenfalls
A IV) Chloride der Elemente Lithium, Natrium, Kalium, Zink oder deren Gemische, bevorzugt Lithium, Natrium, Kalium oder deren Gemische, besonders bevorzugt Natrium und Kalium oder deren Gemische.

Als Komponente B) eignen sich:
B I) nur für die Pyrolyse Polyethylen- oder Polypropylenpolymere oder Copolymere aus Ethylen, Propylen, Buten-1 oder Isobuten oder Polystyrolcopolymere oder Polymethylmethacrylatcopolymere oder Polyethylenoxidcopolymere oder Ethylenvinylacetatcopolymere oder Mischungen aus
B II) für die Pyrolyse und Säurekatalyse
   B₁) 50 bis 100 Gew.-%, bevorzugt 70 bis 90Gew.-%, besonders bevorzugt 80 bis 88 Gew.-% eines Polyoximethylenhomo- oder copolymerisats wie sie z.B. aus EP-A-444475 bekannt sind und
   B₂) 0 bis 50 Gew.-%, bevorzugt 10 bis 30 Gew.-%, besonders bevorzugt 12 bis 25 Gew.-% eines in B₁) homogen gelösten oder mit einer mittleren Teilchengröße von weniger als 1µm in B₁) dispergierten Polymerisats, bevorzugt Poly-1,3-dioxolan, Poly-1,3-dioxan, Poly-1,3-dioxepan, besonders bevorzugt Poly-1,3-dioxepan.

Der organische Binder kann auch aus Mischungen ein oder mehrerer thermoplastischer Harze, wie Polyacetal, Polyethylen, Polypropylen, Polystyrol, Polymethylmethacrylat und ein oder mehreren Weichmachern, wie Polyethylenglykol, Polypropylenglykol, Polybutandiolformal, Phthalsäureestern, Ethylen-Vinylacetat-Copolymeren und Montanesterwachsen bestehen.

Als Polyacetalbinder eignet sich beispielsweise Polyoxymethylen, das vorteilhaft eine Molmasse von 10.000 bis 500.000 aufweist. Neben Homopolymerisaten von Formaldehyd oder Trioxan kommen auch Copolymerisate aus Trioxan mit z.B. cyclischen Ethern wie Ethylenoxid und 1,3-Dioxolan oder Formalen wie 1,3-Dioxepan, 1,3-Dioxan, oder deren Mischungen oder homopolymeres Poly-1,3-dioxolan, Poly-1,3-dioxan, oder Poly-1,3-dioxepan in Betracht, wobei die Mengen der Copolymeren im allgemeinen bei 10 bis 30 Gew.-% der Polymeren liegen.

Außerdem kann die Komponente B) Hilfsmittel, wie thermoplastische Binder, wie Polyethylen, Polymethylmethacrylat oder Polyethylenoxid und Dispergatoren bzw. Schmiermittel, wie Polyethylenglykol, Stearinsäure, Fettalkohole, Polyvinylpyrrolidon oder Polyvinylalkohol enthalten. Die Menge an Hilfsmittel liegt in der Regel zwischen 0,1 und 12 Gew.-% der Gesamtmasse.

Als Komponente C) eignen sich Dispergierhilfsmittel wie sie z.B. aus EP-A-444 475 bekannt sind, beispielsweise organische Carbonsäuren, Amine, Amide oder Maleinimide, Stearinsäure, Polyvinylpyrrolidon, Polyvinylalkohol, Polyethylenglykol, Polypropylenglykol, Polyethylenoxid und Montanwachse, bevorzugt organische Carbonsäuren, Amine, Amide oder Maleinimide, Polyethylenglykol und Polyethylenoxid, besonders bevorzugt organische Carbonsäuren, Amine, Maleinimide, Polyethylenglykol und Polyethylenoxid.

Die zur Herstellung (Zusammenmischung) der erfindungsgemäßen Katalysatoren eingesetzten Gemische enthalten oder bestehen in der Regel bevorzugt aus 15 bis 70 Gew.-%, bevorzugt 30 bis 70 Gew.-%, besonders bevorzugt 50 bis 65Gew.-% Komponente A), aus 30 bis 85 Gew.-%, bevorzugt 30 bis 70 Gew.-%, besonders bevorzugt 35 bis 50 Gew.-% Komponente B) und aus 0 bis 15 Gew.-%, bevorzugt 1 bis 12 Gew.-%, besonders bevorzugt 2 bis 8 Gew.-% Komponente C).

Die Aktivkomponenten können nachträglich auf das Trägermaterial beispielsweise durch Tränken aufgebracht, oder zusammen mit dem Trägermaterial compoundiert werden.

Bei dem erfindungsgemäßen Herstellverfahren werden in der Regel mit Hilfe eines Dispergierhilfsmittel C) die Komponenten A) desagglomeriert und damit die einheitlich großen Ausgangspulverpartikel mit einem vergleichsweise hohen Füllgrad in einen organischen Binder [Komponente B)] eingearbeitet. Der organische Binder füllt die in der Regel nahezu einheitlich großen und regelmäßig angeordneten Zwischenräume der Pulverpartikel. Die bei dem Ausgangspulver der Komponente A) durch Agglomeratbildung vorhandenen Makroporen im Bereich um 100 µm werden durch die Desagglomerierung in der Regel aufgehoben. Nach der Entfernung des organischen Binders und des organischen Dispergierhilfsmittels bleiben bei Einsatz von Pulver mit einer engen monomodalen Korngrößenverteilung streng einheitlich große Poren zwischen den Pulverteilchen zurück. In der Regel beträgt der mittlere Porendurchmesser 25 % des mittleren Korndurchmessers des eingesetzten Pulvers. Beim Einsatz von Pulvern mit polymodaler Korngrößenverteilung oder beim Einsatz von porösen Pulvern können auch polymodale (bimodale, trimodale, tetramodale oder höhermodale) Porenverteilungen hergestellt werden, wobei die Porengröße durch die Zwischenräume zwischen den Pulverteilchen und durch die innere Porosität der Pulverteilchen bedingt ist.

Die erfindungsgemäßen Katalysatoren können heterogene Trägerkatalysatoren oder Vollkatalysatoren sein. Vollkatalysatoren bestehen aus katalytisch aktivem Material. Trägerkatalysatoren können durch Beschichtung von inerten porösen keramischen oder metallischen Katalysatorträgern mit katalytisch aktiven Komponenten oder Precursoren von katalytisch aktiven Komponenten durch gegebenenfalls mehrfaches Tränken, Imprägnieren, Sprühimprägnieren, Sprühtrocknen, Auffällen, Hicoaten, Washcoaten hergestellt werden. Bevorzugt wird nach jedem Tränkschritt der Katalysator getrocknet.

Die nach Pyrolyse erhältlichen Katalysatoren haben eine Porengrößenverteilung von 50 bis 300.000nm gemessen mit der Hg-Druckporosimetrie-Methode und
a) 10 bis 95% des Porenvolumens liegt bei dem 0,2- bis 100-fachen und/oder
b) 10 bis 80% des Porenvolumens liegt bei dem 0,8- bis 100-fachen und/oder
c) 50 bis 95% des Porenvolumens liegt bei dem 0,2- bis 1-fachen und/oder
d) 50 bis 80% des Porenvolumens liegt bei dem 0,8- bis 1-fachen des mittleren Porendurchmessers und
e) die Halbwertsbreite der Porengrößenverteilung beträgt weniger als das 0,6-fache des mittleren Porendurchmessers.

Die nach Säurekatalyse und anschließender Pyrolyse erhältlichen Katalysatoren haben eine Porengrößenverteilung von 50 bis 300.000nm gemessen mit der Hg-Druckporosimetrie-Methode und
a) 10 bis 95% des Porenvolumens liegt bei dem 0,1- bis 3-fachen und/oder
b) 10 bis 80% des Porenvolumens liegt bei dem 0,4- bis 3-fachen und/oder
c) 50 bis 95% des Porenvolumens liegt bei dem 0,1- bis 1-fachen und/oder
d) 50 bis 80% des Porenvolumens liegt bei dem 0,4- bis 1-fachen des mittleren Porendurchmessers und
e) die Halbwertsbreite der Porengrößenverteilung beträgt weniger als das 0,5-fache des mittleren Porendurchmessers.

Der erfindungsgemäße Träger zeichnet sich durch erhöhte Härte aus. Diese hohe Härte ermöglicht ein mehrfaches Tränken des Trägers mit katalytisch aktiven Komponenten und damit eine hohe Aktivmetall-Beladung, während viele Träger nach dem Stand der Technik aufgrund der fehlenden Härte oft schon beim zweiten oder dritten Tränkschritt auseinanderfallen. Die erfindungsgemäß hergestellten Träger zeigen eine sehr gute Wasseraufnahme im Bereich 0,1 bis 1,0 ml/g, so daß im Vergleich zu konventionellen Trägern mehr Aktivkomponente aufgebracht werden kann.

Bei Verwendung von Chloriden als Precusoren bei den Aktivkomponenten bietet sich eine Präparation durch Tränken oder Imprägnieren an. Es kann natürlich auch von anderen Precursoren ausgegangen werden (Nitraten, Carbonaten, Hydroxiden, Acetaten, etc.).

Da für eine hohe Aktivmetallbeladung in der Regel mehrmaliges Tränken notwendig ist, kann auf einfache Weise, nämlich durch Tränken mit unterschiedlichen Salzlösungen, bewußt eine ungleichmäßige Aktivmetallverteilung über den Kornquerschnitt erreicht werden. Durch Vortränken mit Cu-Salz-Lösung und Nachtränken mit Fe-Salz-Lösung können z.B. ein Cu-reicher Kern und eine Fe-reiche Schale im Korn eingestellt werden. In einer bevorzugten Ausführungsform enthält der Katalysator die Aktivkomponenten in der chloridischen Form als CuCl₂/KCl/FeCl₃/NaCl-Mischung mit einem Atomverhältnis K/Cu und Na/Fe von je 0 bis 5.

### Beispiele

### Herstellung der Katalysatoren

### Katalysator 1 Cu-K-Fe-Na auf Si₃N₄-Träger

### Herstellung des Si₃N₄-Trägers

900 g Si₃N₄ (H.C.STARCK; LC12) wurden mit 50g Y₂O₃ (H.C.STARCK; grade fine) und 50 g Al₂O₃ (ALCOA; CT3000SG) mit einem Binder auf Polyacetalbasis, bestehend aus 276 g Polyoxymethylencopolymer (POM/PBDF) aus Trioxan und 2,5 Gew.-% Butandiolformal mit einem durchschnittlichen Molekulargewicht von 150.000, sowie mit 69 g Polybutandiolformal mit einem Molekulargewicht von 50.000 und 50 g Polyethylenglykol mit einem Molekulargewicht von 800 als Hilfsmittel, bei 180°C verknetet, extrudiert, granuliert und in einem Muffelofen unter N₂ bei 600°C 2h pyrolysiert und bei 1000°C 2h vorgesintert. Man erhielt einen Si₃N₄-Träger mit einer BET-Oberfläche von 22,3m²/g und einer Wasseraufnahme von 0,608ml/g.

### Tränkung des Si₃N₄-Trägers

111,5g Si₃N₄-Granulat wurden zweimal jeweils mit 67,8ml einer Lösung aus 7,06 g CuCl₂*2H₂O, 5,58 g KCl, 5,58 g NaCl und 9,29 g FeCl₃*6H₂O gelöst in dest. Wasser (Gesamtlösung 135,6 ml) imprägniert, 16h bei 120°C (nach jedem Tränkschritt) getrocknet und 3h bei 450°C calciniert. Man erhielt braunen Splitt mit einer BET-Oberfiäche von 9,93 m²/g. Das Stampfgewicht betrug 0,978 g/ml (0,5 bis 1 mm Splitt).

### Nachtränkung mit einer FeCl₃-NaCl-Lösung

25 g des zuvor getränkten Si₃N₄-Trägers wurden mit einer Lösung aus 1,39g NaCl und 2,31 g FeCl₃*6H₂O in 15,9 ml Wasser einmal imprägniert, 16h bei 120°C getrocknet und 3 h bei 450°C calciniert. Das Stampfgewicht des Katalysators betrug 0,995 g/ml (0,5 bis 1mm Splitt). Der Katalysator enthielt 1,8 Gew.-% Kupfer und 3 Gew.-% Eisen.

### Katalysator 2 Cu-K-Fe-Na auf SiC-Träger

### Herstellung des SiC-Trägers

1000 g SiC (NORTON, FCP-13-NLC) wurden mit einem Binder auf Polyacetalbasis, bestehend aus 281g Polyoxymethylencopolymer (POM/PBDF) aus Trioxan und 2,5 Gew.-% Butandiolformal mit einem durchschnittlichen Molekulargewicht von 150.000, sowie mit 70 g Polybutandiolformal mit einem Molekulargewicht von 50.000 und 50 g Polyethylenglykol mit einem Molekulargewicht von 800 als Hilfsmittel, bei 180°C verknetet, extrudiert, granuliert und ineinem HERAEUS-Entbinderungsofen (60 l) mit 70 ml/h einer 5 gew.-%igen Lösung von Oxalsäure in Essigsäure (99%ig) oder 30 ml/h 100%ige Salpetersäure bei 140°C unter einem N₂-Strom von 300 l/h 10h entbindert. Danach wurde das Granulat bei 600°C 2h unter N₂ vorgesintert. Man erhielt einen SiC-Träger mit einer BET-Oberfläche von 17,1 m²/g und einer Wasseraufnahme von 0,342 ml/g.

### Tränkung des SiC-Trägers

300 g des SiC-Trägers wurden zweimal mit jeweils 102,6 ml einer Lösung aus 95,99 g CuCl₂*2H₂O, 41,97 g KCl gelöst in dest. Wasser (Gesamtlösung 205,2 ml) imprägniert, 16 h bei 120°C (nach jedem Tränkschritt) getrocknet und 3 h bei 450°C calciniert.

307 g des Zuvor getränkten SiC-Trägers wurden dreimal mit jeweils 105ml einer Lösung aus 37,39 g NaCl und 172,99g FeCl₃*6H₂O gelöst in dest. Wasser (Gesamtlösung 315 ml) imprägniert, 16 h bei 120°C (nach jedem Tränkschritt) getrocknet und 3h bei 450°C calciniert. Man erhielt ein rotbraunes Granulat der chemischen Zusammensetzung 8,1 Gew.-% Eisen und 6,4 Gew.-% Kupfer.

### Katalysator 3 Cu-K-Fe-Na auf SiC-Träger

### Herstellung des SiC-Trägers

1000 g SiC (H.C.STARCK, UF15) wurden mit einem Binder auf Polyacetalbasis, bestehend aus 281g Polyoxymethylencopolymer (POM/PBDF) aus Trioxan und 2,5 Gew.-% Butandiolformal mit einem durchschnittlichen Molekulargewicht von 150.000, sowie mit 70 g Polybutandiolformal mit einem Molekulargewicht von 50.000 und 50 g Polyethylenglykol mit einem Molekulargewicht von 800 als Hilfsmittel, bei 180°C verknetet, auf einem Walzenstuhl zu einem 0,5 mm dicken Fell aufgeschmolzen, zu Plätzchen zerkleinert und diese in einem Drehrohrofen bei 600°C 2 h unter N₂ pyrolysiert und vorgesintert. Man erhielt einen SiC-Träger mit einer BET-Oberfläche von 22,3 m²/g und einer Wasseraufnahme von 0,35 ml/g.

### Tränkung des SiC-Trägers

150 g SiC-Plätzchen wurden zweimal mit jeweils 53ml einer Lösung aus 23,7 g CuCl₂*2H₂O, 10,38 g KCl, 42,78g FeCl₃*6H₂O und 9,26 g NaCl gelöst in dest. Wasser (Gesamtlösung 106 ml) imprägniert, 16 h bei 120°C (nach jedem Tränkschritt) getrocknet und 3h bei 450°C calciniert.

### Nachtränkung mit einer FeCl₃-NaCl-Lösung

70 g der zuvor getränkten SiC-Plätzchen wurden mit 22ml einer Lösung aus 3,92 g NaCl und 18,22 g FeCl₃*6H₂O gelöst in dest. Wasser (Gesamtlösung 25 ml) einmal imprägniert, 16 h bei 120°C getrocknet und 3 h bei 450°C calciniert. Man erhielt rotbraune Plätzchen der Zusammensetzung 3,3 Gew.-% Kupfer und 7,8 Gew.-% Eisen.

### Katalysator 4

### Herstellung des SiC-Trägers

1000 g SiC (H.C.STARCK, UF15) wurden mit einem Binder auf Polyacetalbasis, bestehend aus 281 g Polyoxymethylencopolymer (POM/PBDF) aus Trioxan und 2,5 Gew.-% Butandiolformal mit einem durchschnittlichen Molekulargewicht von 150.000, sowie mit 70 g Polybutandiolformal mit einem Molekulargewicht von 50.000 und 50 g Polyethylenglykol mit einem Molekulargewicht von 800 als Hilfsmittel, bei 180°C verknetet, bei 180°C verstrangt, versplittet und in einem HERAEUS-Entbinderungsofen mit 70 ml/h 5%iger Oxalsäurelösung in Essigsäure (99%ig) oder 30 ml/h 100%ige Salpetersäure bei 140°C unter einem N₂-Strom von 300l/h 10 Stunden entbindert. Danach wurde der Splitt bei 800°C 2h unter Vakuum vorgesintert (BET-Oberfläche 19,9 m²/g; Wasseraufnahme 0,706 ml/g).

### Tränkung des SiC-Trägers

47,2g des zuvor hergestellten SiC-Grobsplitt-Trägers (0.5 bis 2mm) wurden viermal mit jeweils 33,4 ml einer Lösung aus 12,39 g CuCl₂*2H₂O, 4,89g KCl, 36,22 g FeCl₃*6H₂O und 12,06 g NaCl gelöst in dest. Wasser (Gesamtlösung 133,6 ml) imprägniert, 16 h bei 120°C (nach jedem Trankschritt) getrocknet und 3 h bei 450°C calciniert. Man erhielt einen braunen Splitt. Cu-Gehalt = 5,4 Gew.-%, Fe-Gehalt = 7,9 Gew.-%.

### Katalysator 5

### Tränkung des SiC-Trägers

42,2 g des unter Katalysator4 beschriebenen SiC-Grobsplitt-Trägers (0.5 bis 2 mm) wurden zweimal mit jeweils 29,8 ml einer Lösung aus 4,15 g CuCl₂*2H₂O, 1,64g KCl, 12,13g FeCl₃*6H₂O und 4,04 g NaCl gelöst in dest. Wasser (Gesamtlösung 59,6ml) imprägniert, 16h bei 120°C (nach jedem Tränkschritt) getrocknet und 3h bei 450°C calciniert. Man erhielt einen braunen Splitt. Cu-Gehalt = 2,5 Gew.-%, Fe-Gehalt = 4,0 Gew.-%.

### Katalysator 6

### Tränkung des SiC-Trägers

33,2 g des unter Katalysator4 beschriebenen SiC-Grobsplitt-Trägers (0.5 bis 2 mm) wurde mit einer Lösung aus 3,23g CuCl₂*2H₂O, 1,4g KCl, 1,9 g FeCl₃*6H₂O und 0,5g NaCl gelöst in dest. Wasser (Gesamtlösung 23,5ml) imprägniert, 16h bei 120°C (nach jedem Tränkschritt) getrocknet und 3 h bei 450°C calciniert. Man erhielt einen grau-braunen Splitt. Cu-Gehalt = 2,8 Gew.-%, Fe-Gehalt = 0,9 Gew.-%.

### Katalysator 7

### Cr/SiC-Nachschüttung nach einer (Cu-Zn-K-Fe auf SiC)-Hauptschüttung

### Herstellung des SiC-Trägers

1000 g SiC (H.C.STARCK, UF15) wurden mit einem Binder auf Polyacetalbasis, bestehend aus 281g Polyoxymethylencopolymer (POM/PBDF) aus Trioxan und 2,5 Gew.-% Butandiolformal mit einem durchschnittlichen Molekulargewicht von 150.000, sowie mit 70 g Polybutandiolformal mit einem Molekulargewicht von 50.000 und 50 g Polyethylenglykol mit einem Molekulargewicht von 800 als Hilfsmittel, bei 180°C verknetet, bei 180°C extrudiert, versplittet und in einem Drehrohrofen bei 600°C 2 h an Luft pyrolysiert und vorgesintert (Wasseraufnahme 0,527 ml/g).

### Herstellung des Katalysators (Hauptschüttung)

51,2 g des SiC-Trägers wurden zweimal mit jeweils 27 ml einer Lösung aus 3,13 g ZnCl₂, 6,71 g CuCl₂*2H₂O, 4,77 g KCl und 16,95 g FeCl₃*6H₂O gelöst in dest. Wasser (Gesamtlösung 54 ml) imprägniert, 16 h bei 120°C (nach jedem Tränkschritt) getrocknet und 3h bei 450°C calciniert. Man erhielt einen braunen Splitt.

### Herstellung der Cr/SiC-Nachschüttung

47,6 g des SiC-Trägers wurden zweimal mit jeweils 25 ml einer Lösung aus 38,48 g Cr(NO₃)₃*9H₂O gelöst in dest. Wasser (Gesamtlösung 50 ml) imprägniert, 16 h bei 120°C (nach jedem Tränkschritt) getrocknet und 3 h bei 450°C calciniert. Man erhielt einen grau-grünen Splitt.

### Vergleichskatalysator V₁

### Kupfer-Kalium auf Al₂O₃-Träger

251,5 g Al₂O₃-Träger (Pural SCF-Ringe) wurden zweimal mit einer Lösung aus 80,49g CuCl₂*2H₂O und 35,15 g KCl gelöst in Wasser (Gesamtlösung 226ml) imprägniert, 16 h bei 120°C getrocknet und 3h bei 450°C calciniert. Man erhielt grünliche Ringe (Kupfer-Gehalt: 8,2 Gew.-%; BET-Oberfläche: 104 m²/g).

### Vergleichskatalysator V₂

### (Fe-K auf Al₂O₃-Träger)

1133,1 g Al₂O₃-Träger (Puralox SCF/Pural SCF-Ringe) wurden 2 h bei 700°C geglüht und versplittet und zweimal mit einer Lösung aus 533,28 g FeCl₃*6H₂O und 146,88 g KCl gelöst in Wasser (Gesamtlösung 567ml) imprägniert, 4 h bei 160°C getrocknet und 3h bei 450°C calciniert. Man erhielt einen violett-braunen Splitt (Eisen-Gehalt: 7,6 Gew.-%; BET-Oberfläche: 128 m²/g).

### Vergleichskatalysator V₃

### (Cu-Fe-K auf Al₂O₃-Träger)

200 g Al₂O₃ (Pural SCF Ringe) wurden mit 92 ml einer Lösung aus 32,16g CuCl₂*2H₂O, 58 g FeCl₃*6H₂O, 30 g KCl und 114ml Wasser getränkt (Wasseraufnahme: 0,46ml/g), 16 h bei 120°C getrocknet, 3 h bei 450°C calciniert und anschließend mit den restlichen 85 ml der Lösung getränkt, 16 h bei 120°C getrocknet und 3h bei 450°C calciniert. Der Vergleichskatalysator V₃ enthielt 3,8 Gew.-% Cu und 4,5 Gew.-% Fe; Stampfgewicht: 0,974 g/ml (0,5 bis 1 mm Splitt); BET-Oberfläche: 68,6 m²/g.

Beim Versuch, den Kontakt ein drittes Mal zu tränken, zerfiel dieser.

### Beispiele 1 bis 3

### Allgemeine Vorschrift zur instationären Chlorherstellung

In einem beheizten Röhrenreaktor mit 20 ml Katalysator-Festbett-Schüttung wurde eine Splittfraktion von 0,5 bis 1 mm eingefüllt. Nach der Beladephase mit einem trockenen HCl-Strom und anschließender Spülphase mit Inertgas (N₂ oder CO₂) wurde mit Luft oder reinem Sauerstoff regeneriert (dechloriert). Dieser Zyklus wurde wiederholt.

Durch eine on-line IR-Analytik wurde die HCl-Konzentration und durch eine on-line UV-Analytik wurde die Chlorkonzentration mit hoher Zeitauflösung kontinuierlich gemessen. Die integrale Chlormenge, die während der Dechlorierung freigesetzt wurde, konnte zur Kontrolle zusätzlich noch naßchemisch (jodometrisch) ermittelt werden.

Die Ergebnisse sind in den Tabellen 1 bis 3 zusammengefaßt.

**Tabelle 1**

| | | | | | | | | | |
|---|---|---|---|---|---|---|---|---|---|
| HCl-Beladung: 250 ml HCl/h/ml Katalysator 1; 5 Minuten Gegenspülen mit 60 Nl/h CO₂; Regeneration mit 5 Nl/h reinem O₂ mit 250 ml O₂/h/ml Katalysator 1; 23 Zyklen | | | | | | | | | |

| Reaktortemperatur [°C] | Beladung | | | Dechlorierung | | | | | Gesamte Raum-Zeit-Ausbeute [kg Cl₂/t Kat*h] |
|---|---|---|---|---|---|---|---|---|---|
| | HCl-Konzentration [Vol.-%] | HCl-Durchbruch [min] | Beladungsdauer [min] | maximale Chlor-Konzentration [Vol.-%] | mittlere Chlor-Konzentration [Vol.-%] | maximale Rest-HCl-Konzentration [Vol.-%] | mittlere Rest-HCl-Konzentration [Vol.-%] | Dechlorierzeit (bis <10 Vol.-% Cl₂) [min] | |
| 425 | 50 | 6 | 39,5 | 50 | 32,9 | 1,2 | 0,65 | 7,8 | 44,3 |
| 425 | 65 | 8 | 49,5 | 62 | 35,5 | 2 | 1,1 | 10 | 51,1 |
| 425 | 73 | 9,7 | 47,3 | 64 | 36,4 | 1,6 | 0,8 | 10 | 54,4 |
| 440 | 73 | 10 | 45 | 61 | 35,8 | 2,8 | 1,5 | 9,3 | 52 |
| 450 | 73 | 11 | 44,6 | 65 | 37,4 | 2,5 | 1,2 | 9 | 53,7 |
| 460 | 73 | 11,5 | 44,4 | 64 | 38,6 | 2,5 | 1,3 | 9 | 56 |
| 460 | 100 | 15 | 25 | 58 | 35,3 | 2,5 | 1,2 | 9 | 73,3 |

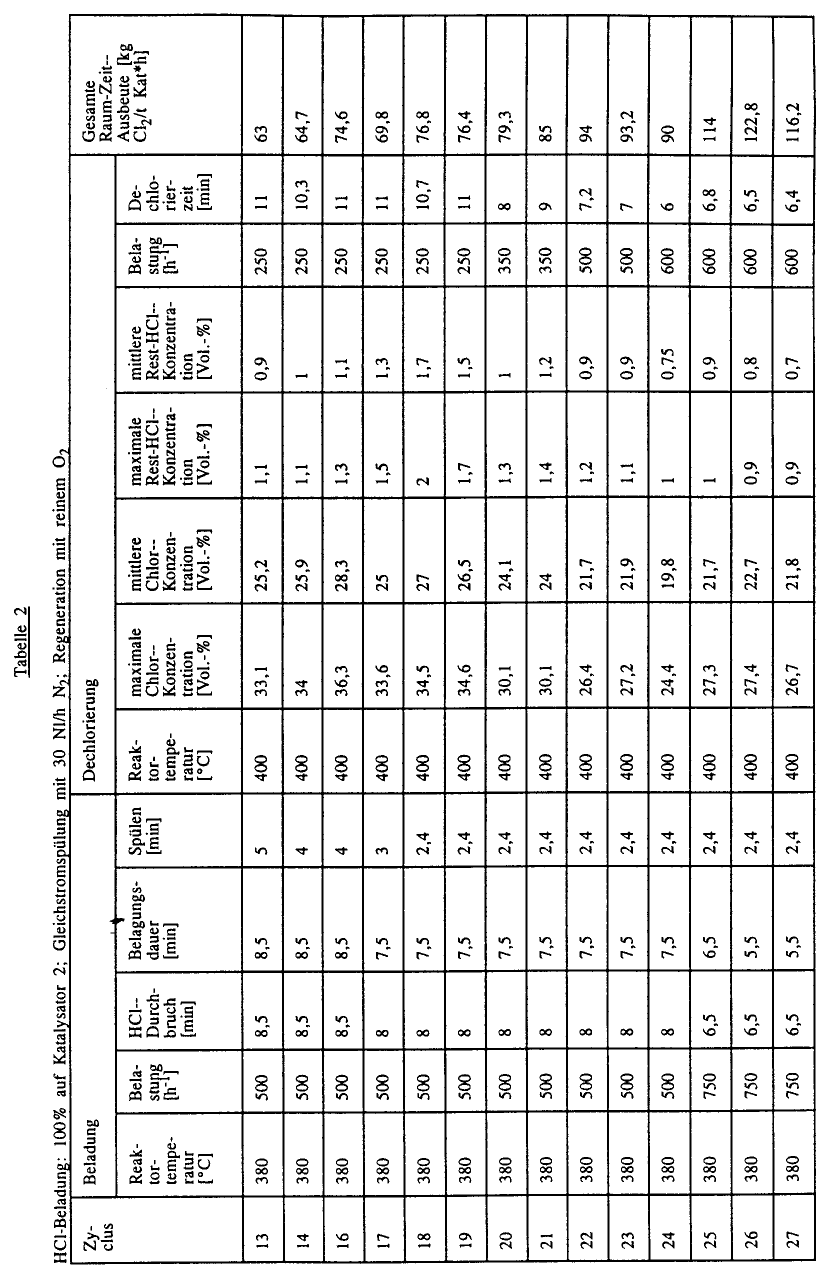

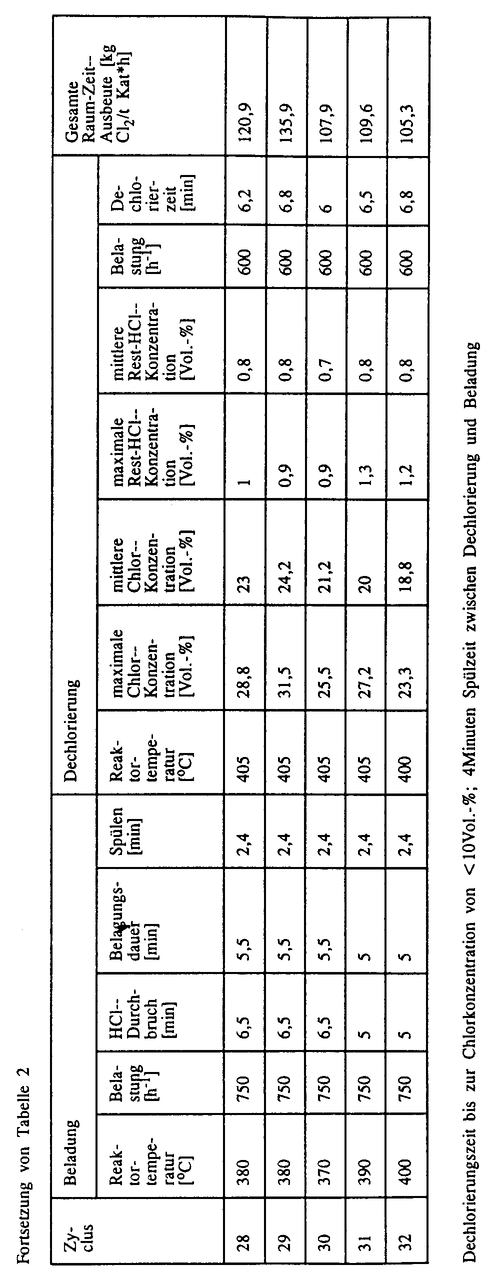

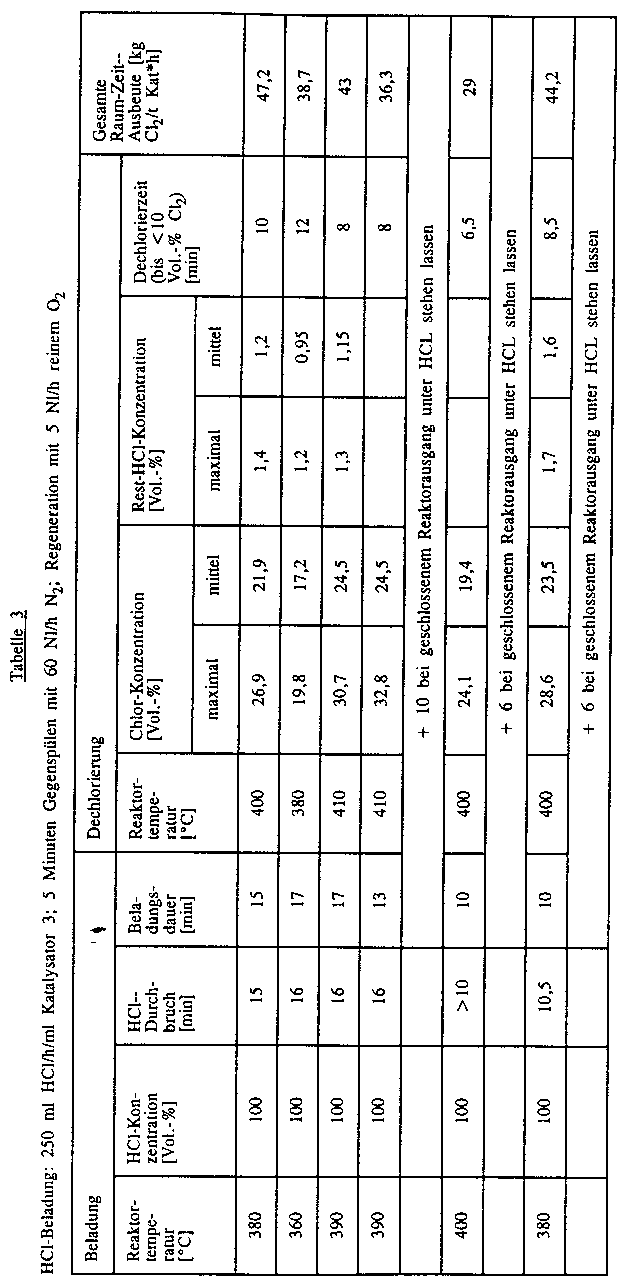

### Beispiel 4

### Langsame Gleichstromspülung zur Erhöhung der HCl-Einwirkzeit

Auf eine 20 ml Schüttung des Katalysators2 (0,5 bis 1mm Splitt) in einem Röhrenreaktor folgte eine Nachschüttung aus 5 ml SiC-Trägermaterial. Nach einer Formierungsphase von 5 Zyklen, in der sich die Performance des Katalysators stetig verbesserte, wurden reproduzierbare Ergebnisse erhalten. Zur Verlängerung der HCl-Einwirkzeit wurde nach Beendigung der HCl-Beladung mit einem sehr niedrigen Stickstoffstrom für 3 Minuten nachgespült.

Die Ergebnisse sind in Tabelle 4 zusammengestellt.

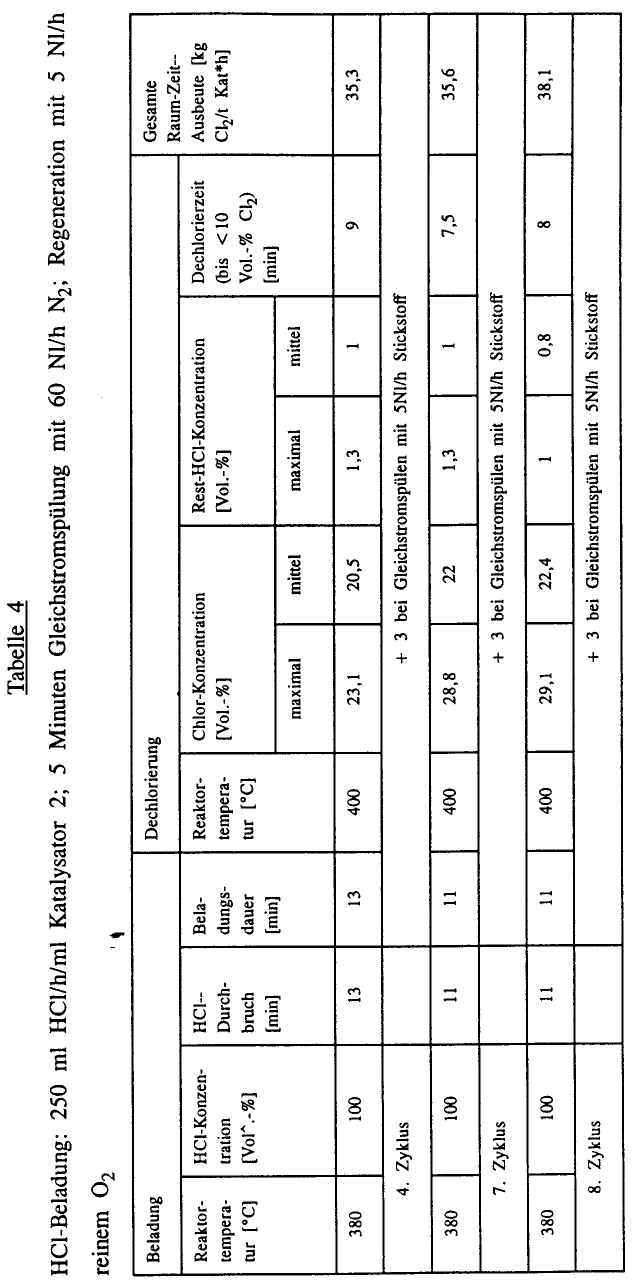

### Beispiel 5

### Gradientenschüttung

Die Festbettschüttung bestand aus 3 unterschiedlichen, in Reihe geschalteten Katalysatoren 4, 5 und 6 in der folgenden Reihenfolge:
- Reaktoreingang:: 8 ml Katalysator 4
- Reaktormitte:: 6 ml Katalysator 5
- Reaktorausgang:: 6 ml Katalysator 6,
wobei zum Reaktorausgang hin die insgesamte Aktivmetallbeladung abnahm und sich das Cu/Fe-Verhältnis vergrößerte.

Die Ergebnisse sind in Tabelle 5 zusammengestellt.

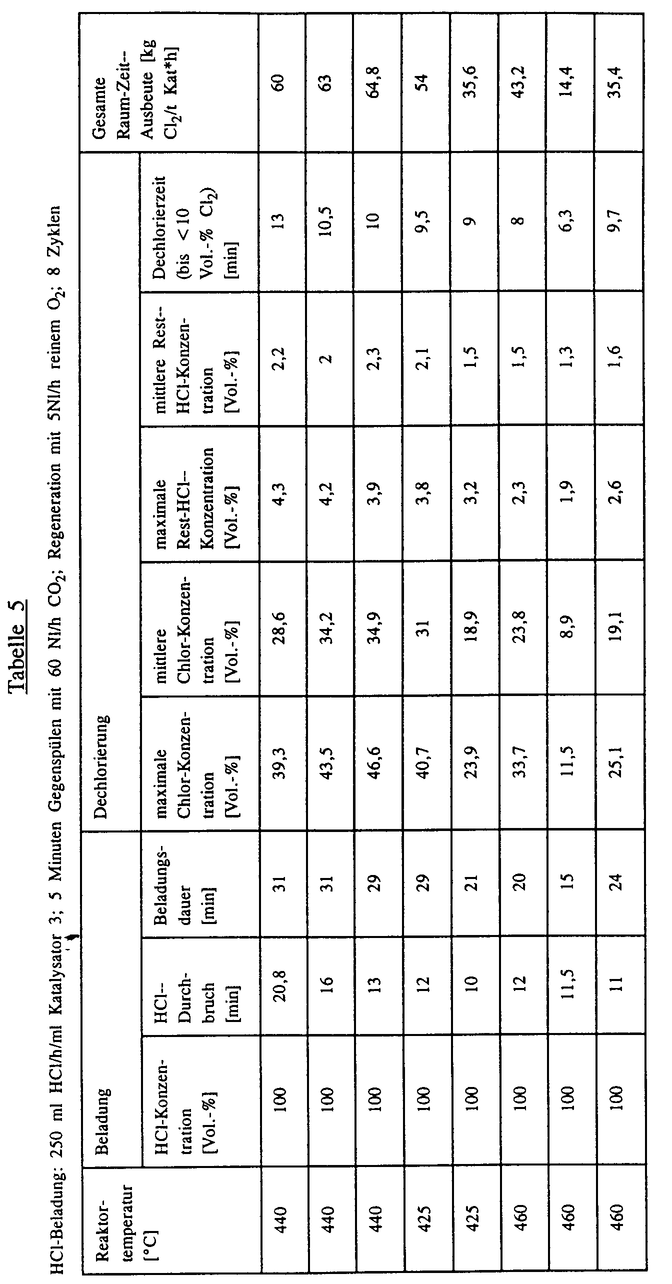

### Beispiel 6

In den Röhrenreaktor wurden 15 ml des Cu-Fe/SiC-Katalysators (reaktoreingangsseitig, in HCl-Strömungsrichtung gesehen) zusammen mit 5 ml der Cr/SiC-Nachschüttung (reaktorausgangsseitig) eingebaut.

In einem Modellversuch (Beladung mit 25% HCl mit 5 Nl/h HCl für 8 min, 6-min-Gegenstrom-Spülphase mit CO₂, Dechlorieren mit 20Nl/h Luft bei 400°C) konnte der Rest-HCl-Gehalt im Regeneriergasstrom auf 0.01 Vol.-%, bei einer Chlorkonzentration von 6Vol.-%, abgesenkt werden.

### Vergleichsbeispiele V₁ bis V₃

### Vergleichsbeispiel V₁

### Kupfer-Kalium auf Al₂O₃-Träger

Analog der allgemeinen Vorschrift der Beispiele 1 bis 3 wurde der Vergleichskatalysator V₁ bei 365°C und HCl-Gasflüssen zwischen 4,8 bis 5,1Nl/h mit 25% HCl (höhere HCl-Konzentrationen hielt der Träger nicht aus) bei einer HCl-Durchbruchszeit von 7 bis 8 Minuten beladen. Die Dechlorierung erfolgte mit 20 Nl/h Luft bei einer Regeneriertemperatur von 365 °C mit Dechlorierungszeiten von 90 Minuten und einer integralen Chlormenge von 0,3 g, woraus sich eine Raum-Zeit-Ausbeute von Kleiner als 9 kg Chlor/t Kat.*h ergab.

### Vergleichsbeispiel V₂

### Fe-K auf Al₂O₃-Träger

Analog der allgemeinen Vorschrift der Beispiele 1 bis 3 wurde der Vergleichskatalysator V₂ bei 365°C und HCl-Gasflüssen zwischen 4,7 bis 5 Nl/h mit 25% HCl (höhere HCl-Konzentrationen hielt der Träger nicht aus) bei einer HCl-Durchbruchszeit von 11 bis 13,5 Minuten beladen. Die Dechlorierung erfolgte mit 20 Nl/h Luft bei einer Regeneriertemperatur von 450°C mit Dechlorierungszeiten von 90 Minuten und einer integralen Chlormenge von 1,1 g, woraus sich eine Raum-Zeit-Ausbeute von Kleiner als 30 kg Chlor/t Kat.*h ergab.

### Vergleichsbeispiel V₃

### Cu-Fe-K auf Al₂O₃-Träger

Analog der allgemeinen Vorschrift der Beispiele 1 bis 3 wurde der Vergleichskatalysator V₃ bei 365°C und HCl-Gasflüssen zwischen 4 bis 5 Nl/h mit 25% HCl (höhere HCl-Konzentrationen hielt der Träger nicht aus) bei einer HCl-Durchbruchszeit von 10 bis 14 Minuten beladen. Die Dechlorierung erfolgte mit 20 Nl/h Luft bei einer Regeneriertemperatur von 365 °C mit Dechlorierungszeiten von 60 Minuten und einer integralen Chlormenge von 0,9 g, woraus sich eine Raum-Zeit-Ausbeute von Kleiner als 34 kg Chlor/t Kat.*h ergab.

Erfolgte die Dechlorierung mit 20 Nl/h Luft bei einer Regeneriertemperatur von 380°C, wurden Dechlorierungszeiten von 35 Minuten und eine integrale Chlormenge von 0,7 g gefunden, woraus sich eine Raum-Zeit-Ausbeute von 38 kg Chlor/t Kat.*h ergab.

Bei einer Reaktortemperatur von 400°C bei der Beladung und bei der Dechlorierung erhielt man eine maximale Chlorkonzentration von 8 Vol.-% Cl₂ und eine mittlere Chlorkonzentration von 4Vol.-% Cl₂ bei Dechlorierzeiten (bis < 2 Vol.-% Chlor) von 25 Minuten. Die freigesetzte Chlormenge betrug integral 1g. Die maximal gemessene Raum-Zeit-Ausbeute betrug 40 kg Chlor/t Kat.*h.

## Patentansprüche

1. Verfahren zur Herstellung von Chlor aus Chlorwasserstoff durch alternierende
a) Beladung eines Katalysators mit Chlorwasserstoffgas bei Temperaturen von 300 bis 420°C und
b) anschließende Regenerierung dieses Katalysators mit einem sauerstoff-enthaltenden Gas bei Temperaturen von 370 bis 460°C, wobei der Temperaturunterschied von a) zu b) Kleiner als 100°C ist und
man als Katalysator monomodale oder polymodale Sinterformteile einsetzt, die im wesentlichen aus
2 bis 30 Gew.-% Oxiden und/oder Chloriden von Kupfer, Eisen, Ruthenium, Cer, Bismut, Nickel, Cobalt, Gallium, Neodym oder deren Gemischen,
0 bis 30 Gew.-% Chloriden von Lithium, Natrium, Kalium, Zink oder deren Gemischen und
98 bis 40 Gew.-% keramischen Trägern, silikatischen Trägern, Glasträgern oder deren Gemischen
bestehen, hergestellt durch Verformen eines Gemisches aus
I.) den Komponenten
A) 15 bis 70 Vol.-% eines anorganischen, eines metallischen Pulvers und/oder einer Aktivkomponente,
B I) 30 bis 85 Vol.-% eines Polyethylen- oder Polypropylenpolymers oder eines Copolymeren aus Ethylen, Propylen, Buten-1 oder Isobuten oder eines Polystyrolcopolymers oder eines Polymethylmethacrylatcopolymers oder eines Polyethylenoxidcopolymers oder eines Ethylenvinylacetatcopolymers oder
B II) einer Mischung aus
B₁) 50 bis 100 Gew.-% eines Polyoximethylenhomo- oder copolymerisats und
B₂) 0 bis 50 Gew.-% eines in B₁) homogen gelösten oder mit einer mittleren Teilchengröße von weniger als 1µm in B₁) dispergierten Polymerisats und
C) 0 bis 15 Vol.-% eines Dispergierhilfsmittels,
durch Entfernen des Bindemittels durch Pyrolyse bei Temperaturen von 300 bis 600°C und anschließendes Vorsintern bei Temperaturen von 600 bis 1400°C und gegebenenfalls Aufbringen von Aktivkomponenten auf die Komponente A) oder auf der vorgesinterten Masse durch gegebenenfalls mehrfaches Tränken, Imprägnieren, Sprühimprägnieren, Auffällen, Hicoaten oder Washcoaten, wobei die Katalysatoren nach der pyrolytischen Entfernung des Binders eine spezifische Oberfläche nach BET von 0,01 bis 250m²/g und eine Porengrößenverteilung von 50 bis 300.000nm gemessen mit der Hg-Druckporosimetrie-Methode aufweisen und
a) 10 bis 95% des Porenvolumens bei dem 0,2- bis 100-fachen und/oder
b) 10 bis 80% des Porenvolumens bei dem 0,8- bis 100-fachen und/oder
c) 50 bis 95% des Porenvolumens bei dem 0,2- bis 1-fachen und/oder
d) 50 bis 80% des Porenvolumens bei dem 0,8- bis 1-fachen des mittleren Porendurchmessers liegt und
e) die Halbwertsbreite der Porengrößenverteilung weniger als das 0,6-fache des mittleren Porendurchmessers beträgt,
oder
II.) den Komponenten
A) 15 bis 70 Vol.-% eines anorganischen, eines metallischen Pulvers und/oder einer Aktivkomponente
B II) einer Mischung aus
B₁) 50 bis 100 Gew.-% eines Polyoximethylenhomo- oder copolymerisats und
B₂) 0 bis 50 Gew.-% eines in B₁) homogen gelösten oder mit einer mittleren Teilchengröße von weniger als 1µm in B₁) dispergierten Polymerisats und
C) 0 bis 15 Vol.-% eines Dispergierhilfsmittels,
durch Entfernen des Bindemittels durch Behandlung mit einer Säure bei Temperaturen von 100 bis 160°C, Restpyrolyse bei Temperaturen von 400 bis 600°C und anschließendes Vorsintern bei Temperaturen von 600 bis 1400°C und gegebenenfalls Aufbringen von Aktivkomponenten auf der Komponente A) oder auf der vorgesinterten Masse durch gegebenenfalls mehrfaches Tränken, Imprägnieren, Sprühimprägnieren, Auffällen, Hicoaten oder Washcoaten, wobei die Katalysatoren nach der pyrolytischen Entfernung des Binders eine spezifische Oberfläche nach BET von 0,01 bis 250m²/g und eine Porengrößenverteilung von 50 bis 300.000nm gemessen mit der Hg-Druckporosimetrie-Methode aufweisen und
a) 10 bis 95% des Porenvolumens bei dem 0,1- bis 3-fachen und/oder
b) 10 bis 80% des Porenvolumens bei dem 0,4- bis 3-fachen und/oder
c) 50 bis 95% des Porenvolumens bei dem 0,1- bis 1-fachen und/oder
d) 50 bis 80% des Porenvolumens bei dem 0,4- bis 1-fachen des mittleren Porendurchmessers liegt und
e) die Halbwertsbreite der Porengrößenverteilung weniger als das 0,5-fache des mittleren Porendurchmessers beträgt.

2. Verfahren zur Herstellung von Chlor aus Chlorwasserstoff nach Anspruch 1, dadurch gekennzeichnet, daß man nach jedem Schritt a), b) mit einem inerten Gas spült.

3. Verfahren zur Herstellung von Chlor aus Chlorwasserstoff nach einem der Ansprüche 1 oder 2, dadurch gekennzeichnet, daß man Katalysatoren auf keramischen Trägern einsetzt und bevorzugt die Umsetzungen im Festbett instationär durchführt.

4. Verfahren zur Herstellung von Chlor aus Chlorwasserstoff nach einem der Ansprüche 1 bis 3, dadurch gekennzeichnet, daß man als keramische Träger SiC, Si₃N₄, BN, B₄C, WC, TiC, TiN, ZrN, AlN oder deren Gemische einsetzt.

5. Verfahren zur Herstellung von Chlor aus Chlorwasserstoff nach Anspruch 4, dadurch gekennzeichnet, daß man als keramische Träger SiC, Si₃N₄ oder deren Gemische einsetzt.

6. Verfahren zur Herstellung von Chlor aus Chlorwasserstoff nach einem der Ansprüche 1 bis 5, dadurch gekennzeichnet, daß man die Beladung a) und Regenerierung b)
a) bei Temperaturen von 360 bis 410°C und
b) bei Temperaturen von 380 bis 420°C
durchführt.

7. Verfahren zur Herstellung von Chlor aus Chlorwasserstoff nach einem der Ansprüche 1 bis 6, dadurch gekennzeichnet, daß man die Umsetzungen in Gegenwart eines Katalysators durchführt, der als Aktivkomponenten Cu/Fe-Mischungen im Atomverhältnis von 9:1 bis 1:9 enthält.

8. Verfahren zur Herstellung von Chlor aus Chlorwasserstoff nach einem der Ansprüche 1 bis 7, dadurch gekennzeichnet, daß man die Umsetzungen in Gegenwart eines Katalysators durchführt, der als Aktivkomponenten m der chloridischen Form CuCl₂/KCl/FeCl₃/NaCl-Mischungen enthält, wobei das Atomverhältnis K/Cu zwischen 0 und 5 und das Atomverhältnis Na/Fe zwischen 0 und 5 liegt.

## Claims

1. A process for preparing chlorine from hydrogen chloride by alternate
a) loading of a catalyst with hydrogen chloride gas at from 300 to 420°C and
b) subsequent regeneration of this catalyst with an oxygen-containing gas at from 370 to 460°C, wherein the temperature difference between a) and b) is less than 100°C and
the catalyst used comprises monomodal or polymodal sintered shaped parts essentially comprising
from 2 to 30 % by weight of oxides and/or chlorides of copper, iron, ruthenium, cerium, bismuth, nickel, cobalt, gallium, neodymium or mixtures thereof,
from 0 to 30 % by weight of chlorides of lithium, sodium, potassium, zinc or mixtures thereof and
from 98 to 40 % by weight of ceramic supports, siliceous supports, glass supports or mixtures thereof,
and produced by shaping a mixture of
I.) the components
A) from 15 to 70 % by volume of an inorganic powder, a metallic powder and/or an active component,
BI) from 30 to 85 % by volume of a polyethylene or polypropylene polymer or of a copolymer of ethylene, propylene, 1-butene or isobutene or of a polystyrene copolymer or of a polymethyl methacrylate copolymer or of a polyethylene oxide copolymer or of an ethylene-vinyl acetate copolymer or
B II) a mixture of
B₁) from 50 to 100 % by weight of a polyoxymethylene homopolymer or copolymer and
B₂) from 0 to 50 % by weight of a polymer homogeneously dissolved in B₁) or dispersed in B₁) at a mean particle size of less than 1 µm and
C) from 0 to 15 % by volume of a dispersant,
removing the binder by pyrolysis at from 300 to 600°C and subsequent presintering at from 600 to 1400°C and, if desired, applying active components to the component A) or to the presintered composition by, if desired multiple, steeping, impregnation, spray impregnation, precipitating on, hicoating or washcoating, where the catalysts after the pyrolytic removal of the binder have a BET specific surface area of from 0.01 to 250 m²/g and a pore size distribution of from 50 to 300,000 nm measured by the mercury pressure porosimetry method and
a) from 10 to 95 % of the pore volume is at from 0.2 to 100 times the mean pore diameter and/or
b) from 10 to 80 % of the pore volume is at from 0.8 to 100 times the mean pore diameter and/or
c) from 50 to 95 % of the pore volume is at from 0.2 to 1 times the mean pore diameter and/or
d) from 50 to 80 % of the pore volume is at from 0.8 to 1 times the mean pore diameter and
e) the width at half height of the pore size distribution is less than 0.6 times the mean pore diameter,
or
II.) the components
A) from 15 to 70 % by volume of an inorganic powder a metallic powder and/or an active component,
B II) a mixture of
B₁) from 50 to 100 % by weight of a polyoxymethylene homopolymer or copolymer and
B₂) from 0 to 50 % by weight of a polymer homogeneously dissolved in B₁) or dispersed in B₁) at a mean particle size of less than 1 µm and
C) from 0 to 15 % by volume of a dispersant,
removing the binder by treatment with an acid at from 100 to 160 °c, residue pyrolysis at from 400 to 600°C and subsequent presintering at from 600 to 1400°C and, if desired, applying active components to the component A) or to the presintered composition by, if desired multiple, steeping, impregnation, spray impregnation, precipitating on, hicoating or washcoating, where the catalysts after the pyrolytic removal of the binder have a BET specific surface area of from 0.01 to 250 m²/g and a pore size distribution of from 50 to 300,000 nm measured by the mercury pressure porosimetry method and
a) from 10 to 95 % of the pore volume is at from 0.1 to 3 times the mean pore diameter and/or
b) from 10 to 80 % of the pore volume is at from 0.4 to 3 times the mean pore diameter and/or
c) from 50 to 95 % of the pore volume is at from 0.1 to 1 times the mean pore diameter and/or
d) from 50 to 80 % of the pore volume is at from 0.4 to 1 times the mean pore diameter and
e) the width at half height of the pore size distribution is less than 0.5 times the mean pore diameter.

2. A process for preparing chlorine from hydrogen chloride as claimed in claim 1, wherein flushing with an inert gas is carried out after each step a), b).

3. A process for preparing chlorine from hydrogen chloride as claimed in claim 1 or 2, wherein catalysts on ceramic supports are used and the reactions are preferably carried out in a fixed bed in a non-steady-state manner.

4. A process for preparing chlorine from hydrogen chloride as claimed in any of claims 1 to 3, wherein the ceramic supports used are SiC, Si₃N₄, BN, B₄C, WC, TiC, TiN, ZrN, AlN or mixtures thereof.

5. A process for preparing chlorine from hydrogen chloride as claimed in claim 4, wherein the ceramic supports used are SiC, Si₃N₄ or mixtures thereof.

6. A process for preparing chlorine from hydrogen chloride as claimed in any of claims 1 to 5, wherein the loading a) and regeneration b) are carried out
a) at from 360 to 410°C and
b) at from 380 to 420°C.

7. A process for preparing chlorine from hydrogen chloride as claimed in any of claims 1 to 6, wherein the reactions are carried out in the presence of a catalyst comprising as active components Cu/Fe mixtures in an atomic ratio of from 9:1 to 1:9.

8. A process for preparing chlorine from hydrogen chloride as claimed in any of claims 1 to 7, wherein the reactions are carried out in the presence of a catalyst comprising as active components in the chloride form CuCl₂/KCl/FeCl₃/NaCl mixtures, where the atomic ratio K/Cu is from 0 to 5 and the atomic ratio Na/Fe is from 0 to 5.

## Revendications

1. Procédé de préparation de chlore à partir d'acide chlorhydrique par, en alternance,
a) chargement d'un catalyseur par du gaz chlorhydrique à des températures de 300 à 420°C, et
b) régénération ultérieure de ce catalyseur par un gaz contenant de l'oxygène, à des températures de 370 à 460°C,
la différence de température entre a) et b) étant inférieure à 100°C,
et par mise en oeuvre, comme catalyseur, de pièces frittées monomodales ou polymodales, qui sont constituées essentiellement
de 2 à 30% en poids d'oxydes et/ou de chlorures de cuivre, de fer, de ruthénium, de cérium, de bismuth, de nickel, de cobalt, de gallium, de néodyme ou de leurs mélanges,
de 0 à 30% en poids de chlorures de lithium, de sodium, de potassium, de zinc ou de leurs mélanges, et
de 98 à 40% en poids de supports céramiques, de supports silicatés, de supports à base de verre ou de leurs mélanges,
préparées par façonnage d'un mélange à base
I.) des composants
A) de 15 à 70% en volume d'une poudre inorganique, d'une poudre métallique et/ou d'un composant actif,
B I) de 30 à 85% en volume d'un polymère de polyéthylène ou de polypropylène ou d'un copolymère d'éthylène, de propylène, de butène-1 ou d'isobutène ou d'un copolymère de polysryrène ou d'un copolymère de polyméthacrylate de méthyle ou d'un copolymère d'oxyde de polyèthylène ou d'un copolymère d'éthylène et d'acétate de vinyle ou
B II) d'un mélange
B₁) de 50 à 100% en poids d'un homopolymère ou copolymère de polyoxyméthylène, et
B₂) de 0 à 50% en poids d'un polymère dissous de manière homogène dans B₁) ou dispersé dans B₁) avec une taille moyenne des particules inférieure à 1 µm, et
C) de 0 à 15% en volume d'un agent auxiliaire de dispersion,
par élimination du liant par pyrolyse à des températures de 300 à 600°C et préfrittage ultérieur à des températures de 600 à 1400°C et éventuellement application de composants actifs sur le composant A) ou sur la masse préfrittée par immersion, imprégnation, imprégnation par pulvérisation, dépôt, hicoating ou washcoating, éventuellement à plusieurs reprises, où les catalyseurs présentant après l'élimination par pyrolyse du liant une surface spécifique selon BET de 0,01 à 250 m²/g et une répartition de la taille des pores de 50 à 300.000 nm, mesurée par la méthode de porosimétrie sous pression de Hg, et
a) 10 à 95% du volume poreux se présentent pour 0,2 à 100 fois le diamètre moyen des pores, et/ou
b) 10 à 80% du volume poreux se présentent pour 0,8 à 100 fois ce diamètre, et/ou
c) 50 à 95% du volume poreux se présentent pour 0,2 à 1 fois ce diamètre, et/ou
d) 50 à 80% du volume poreux se présentent pour 0,8 à 1 fois ce diamètre, et
e) la largeur de valeur moyenne de la répartition des tailles des pores est inférieure à 0,6 fois le diamètre moyen des pores,
ou
II.) des composants
A) de 15 à 70% en volume d'une poudre inorganique, d'une poudre métallique et/ou d'un composant actif,
B II) d'un mélange
B₁) de 50 à 100% en poids d'un homopolymère ou copolymère de polyoxyméthylène, et
B₂) de 0 à 50% en poids d'un polymère dissous de manière homogène dans B₁) ou dispersé dans B₁) avec une taille moyenne des particules inférieure à 1 µm, et
C) de 0 à 15% en volume d'un agent auxiliaire de dispersion,
par élimination du liant par traitement avec un acide à des températures de 100 à 160°C, pyrolyse résiduaire à des températures de 400 à 600°C et préfrittage ultérieur à des températures de 600 à 1400°C et éventuellement application de composants actifs sur le composant A) ou sur la masse préfrittée par immersion, imprégnation, imprégnation par pulvérisation, dépôt, hicoating ou washcoating à éventuellement plusieurs reprises, les catalyseurs présentant après l'élimination par pyrolyse du liant une surface spécifique selon BET de 0,01 à 250 m²/g et une répartition des tailles des pores de 50 à 300.000 nm, mesurée par la méthode de porosimétrie sous pression de Hg, et
a) 10 à 95% du volume poreux se présentent pour 0,1 à 3 fois le diamètre moyen des pores, et/ou
b) 10 à 80% du volume poreux se présentent pour 0,4 à 3 fois ce diamètre, et/ou
c) 50 à 95% du volume poreux se présentent pour 0,1 à 1 fois ce diamètre, et/ou
d) 50 à 80% du volume poreux se présentent pour 0,4 à 1 fois ce diamètre, et
e) la largeur de valeur moyenne de la répartition des tailles des pores est inférieure à 0,5 fois le diamètre moyen des pores.

2. Procédé de préparation de chlore à partir d'acide chlorhydrique selon la revendication 1, caractérisé en ce que, après chaque étape a), b), on balaye avec un gaz inerte;

3. Procédé de préparation de chlore à partir d'acide chlorhydrique suivant l'une des revendications 1 et 2, caractérisé en ce qu'on met en oeuvre des catalyseurs sur supports céramiques et en ce qu'on effectue de préférence les réactions de manière instationnaire dans un lit fixe.

4. Procédé de préparation de chlore à partir d'acide chlorhydrique suivant l'une des revendications 1 à 3, caractérisé en ce que, comme supports céramiques, on met en oeuvre SiC, Si₃N₄, BN, B₄C, WC, TiC, TiN, ZrN, AlN ou leurs mélanges.

5. Procédé de préparation de chlore à partir d'acide chlorhydrique suivant la revendication 4, caractérisé en ce que, comme supports céramiques, on met en oeuvre SiC, Si₃N₄ ou leurs mélanges.

6. Procédé de préparation de chlore à partir d'acide chlorhydrique suivant l'une des revendications 1 à 5, caractérisé en ce qu'on effectue le chargement a) et la régénération b)
a) à des températures de 360 à 410°C, et
b) à des températures de 380 à 420°C.

7. Procédé de préparation de chlore à partir d'acide chlorhydrique suivant l'une des revendications 1 à 6, caractérisé en ce qu'on effectue les réactions en présence d'un catalyseur qui contient, comme composants actifs, des mélanges de Cu/Fe dans un rapport atomique de 9/1 à 1/9.

8. Procédé de préparation de chlore à partir d'acide chlorhydrique suivant l'une des revendications 1 à 7, caractérisé en ce qu'on effectue les réactions en présence d'un catalyseur qui contient, comme composants actifs, des mélanges CuCl₂/KCl/FeCl₃/NaCl sous forme chlorurée, le rapport atomique K/Cu étant compris entre 0 et 5 et le rapport atomique Na/Fe entre 0 et 5.
